# EUROPÄISCHE PATENTANMELDUNG

(11) **EP 4 552 953 A1**
(43) Veröffentlichungstag der Anmeldung: **14.05.2025**
(21) Anmeldenummer: 24196491.5
(22) Anmeldetag: 26.08.2024
(51) Int. Cl.: B62D 24/04

(54) **ANSCHLAGSYSTEM UND FAHRZEUG**

(30) Priorität: 07.11.2023 DE 102023130815
(71) Anmelder: Rheinmetall Landsysteme GmbH, 29345 Südheide (DE)
(72) Erfinder: OLEY, Dieter, 34127 Kassel (DE); MARTINI, Gunnar, 34317 Habichtswald (DE)
(74) Vertreter: Horn Kleimann Waitzhofer Schmid-Dreyer Patent- und Rechtsanwälte PartG mbB

(57) **Zusammenfassung**

Anschlagsystem (37A, 37B, 37C) zum Verlasten eines Fahrzeugs (1A, 1B, 1C), mit mehreren Anschlagmitteln (38, 39, 40, 41), die mit einem Fahrgestellrahmen (23) des Fahrzeugs (1A, 1B, 1C) verbindbar sind, und mehreren Führungselementen (51, 52, 53, 54) für die Anschlagmittel (38, 39, 40, 41), wobei jedem Führungselement (51, 52, 53, 54) ein Anschlagmittel (38, 39, 40, 41) zugeordnet ist, das zumindest abschnittsweise durch das jeweilige Führungselement (51, 52, 53, 54) hindurchgeführt ist, und wobei die Führungselemente (51, 52, 53, 54) zumindest abschnittsweise durch einen von dem Fahrgestellrahmen (23) getragenen Fahrzeugaufbau (2) des Fahrzeugs (1A, 1B, 1C) hindurchführbar sind.

## Beschreibung

Die vorliegende Erfindung betrifft ein Anschlagsystem zum Verlasten eines Fahrzeugs und ein Fahrzeug mit einem derartigen Anschlagsystem.

Zum Verlasten eines Fahrzeugs, insbesondere eines Radfahrzeugs, unter einem Luftfahrzeug können an dem Fahrzeug geeignete Anschlagmittel, wie beispielsweise Gurte oder Ketten, angeschlagen werden. Diese Anschlagmittel können gemäß betriebsinternen Kenntnissen beispielsweise an einem Dach des Fahrzeugs oder dem Dach nahen Bauteilen befestigt werden. Dazu kann das Fahrzeug an dem Dach mit geeigneten Ösen ausgestattet sein. Wird nun auf die Anschlagmittel eine Zugkraft aufgebracht, wird das Fahrzeug an einem Fahrzeugaufbau des Fahrzeugs nach oben gezogen.

Dadurch wird ein Fahrgestell des Fahrzeugs von dem Fahrzeugaufbau her in die Höhe gezogen. Das Fahrgestell hängt dann nur über Fahrgestell-Fahrzeugaufbau-Schnittstellen an dem Fahrzeugaufbau, wodurch die Fahrgestell-Fahrzeugaufbau-Schnittstellen mechanisch belastet werden. Diese Belastungen sind nur schwer mit den üblichen Lastkollektiven für derartige Fahrgestell-Fahrzeugaufbau-Schnittstellen zwischen dem Fahrzeugaufbau und dem Fahrgestell vereinbar. Es ist daher wünschenswert, die Fahrgestell-Fahrzeugaufbau-Schnittstellen mechanisch zu entlasten.

Bei einer Befestigung der Anschlagmittel direkt an dem Fahrgestell hingegen ergäbe sich die Problematik, die Anschlagmittel dann aufwändig an Seitenwänden des Fahrzeugaufbaus entlang nach oben in Richtung des Luftfahrzeugs zu führen, um bei Bewegungen des Fahrzeugs während des Verlastens desselben ein Durchscheuern der Anschlagmittel an den Seitenwänden und Kanten, wie beispielsweise Dachkanten, zu vermeiden. Hierzu könnten Schienen, Ösen oder Rollen zum Einsatz kommen, um die Anschlagmittel nach oben zu führen. Diese zusätzlichen Bauteile hätten jedoch einen negativen Einfluss auf die Gewichtsbilanz und eine Fahrzeugbreite des Fahrzeugs. Ferner wäre es noch möglich, die Anschlagmittel über Ösen an einem Heck und einer Front des Fahrzeugs zu befestigen.

Die vorgenannten Lösungsansätze erfordern jedoch, dass entweder bei dem Anbringen der Anschlagmittel direkt an dem Fahrgestell eine wie oben beschriebene Führung der Anschlagmittel außen entlang des Fahrzeugaufbaus notwendig wird oder bei dem Anbringen der Anschlagmittel an dem Dach eine sehr hohe Belastung der Fahrgestell-Fahrzeugaufbau-Schnittstellen stattfindet. Gegebenenfalls notwendige Führungshilfen für die Anschlagmittel an den Seitenwänden des Fahrzeugsaufbaus führen ferner zu einem größeren Fahrzeuggewicht und zu einer größeren Fahrzeugbreite. Dies stellt ein Risiko für die Zulassungsfähigkeit des Fahrzeugs dar.

Vor diesem Hintergrund besteht eine Aufgabe der vorliegenden Erfindung darin, ein verbessertes Anschlagsystem zum Verlasten eines Fahrzeugs zur Verfügung zu stellen.

Demgemäß wird ein Anschlagsystem zum Verlasten eines Fahrzeugs vorgeschlagen. Das Anschlagsystem umfasst mehrere Anschlagmittel, die mit einem Fahrgestellrahmen des Fahrzeugs verbindbar sind, und mehrere Führungselemente für die Anschlagmittel, wobei jedem Führungselement ein Anschlagmittel zugeordnet ist, das zumindest abschnittsweise durch das jeweilige Führungselement hindurchgeführt ist, und wobei die Führungselemente zumindest abschnittsweise durch einen von dem Fahrgestellrahmen getragenen Fahrzeugaufbau des Fahrzeugs hindurchführbar sind.

Dadurch, dass die Anschlagmittel direkt mit dem Fahrgestellrahmen verbindbar sind, erfolgt eine verminderte Lasteinleitung in den Fahrzeugaufbau selbst.

Fahrgestellrahmen-Fahrzeugaufbau-Schnittstellen zwischen dem Fahrgestellrahmen und dem Fahrzeugaufbau werden hierdurch mechanisch geringer belastet. Dadurch, dass die Führungselemente durch den Fahrzeugaufbau selbst hindurchführbar sind, kann auf seitliche Führungen für die Anschlagmittel verzichtet werden, wodurch sich beispielsweise eine Gewichtsersparnis und eine Reduzierung einer Fahrzeugbreite des Fahrzeugs ergibt. Hierdurch kann auch eine bessere Nutzung einer maximal zulässigen Fahrzeugbreite erzielt werden. Ferner reduzieren sich die Risiken bei der Zulassung des Fahrzeugs und es ergibt sich eine Zeitersparnis bei dem Verlasten des Fahrzeugs.

Unter einem "Verlasten" des Fahrzeugs ist vorliegend insbesondere zu verstehen, dass das Fahrzeug beispielsweise mit Hilfe eines Luftfahrzeugs transportiert werden kann. Hierzu wird beispielsweise ein Kran oder eine Winde des Luftfahrzeugs mit Hilfe weiterer Anschlagmittel mit den Anschlagmitteln des Anschlagsystems verbunden. Das Fahrzeug wird dann mit Hilfe des Luftfahrzeugs angehoben und kann so verlastet oder transportiert werden. Das Fahrzeug wird dabei bevorzugt als Außenlast des Luftfahrzeugs transportiert. Dies bedeutet insbesondere, dass das Fahrzeug nicht innerhalb des Luftfahrzeugs, sondern außenseitig an diesem transportiert wird.

Das Fahrzeug ist insbesondere ein Luftlandefahrzeug. Daher können vorliegend die Begriffe "Fahrzeug" und "Luftlandefahrzeug" beliebig gegeneinander getauscht werden. Das Fahrzeug kann ein geschütztes Fahrzeug sein. Dies ist jedoch nicht zwingend erforderlich. Darunter, dass das Fahrzeug "geschützt" ist, kann vorliegend zu verstehen sein, dass das Fahrzeug gegen Beschuss, Sprengfallen, unkonventionelle Spreng- oder Brandvorrichtungen (USBV, Engl.: Improvised Explosive Devices, IED), Minen oder dergleichen geschützt ist. Wie zuvor erwähnt, ist es jedoch nicht erforderlich, dass das Fahrzeug ein geschütztes Fahrzeug ist. Das Fahrzeug kann ein Personenkraftwagen oder ein Nutzfahrzeug sein.

Das Fahrzeug ist vorzugsweise ein Radfahrzeug. Das Fahrzeug kann jedoch auch ein Kettenfahrzeug sein. Nachfolgend wird jedoch davon ausgegangen, dass das Fahrzeug ein Radfahrzeug ist. Das Fahrzeug ist insbesondere ein militärisches Fahrzeug. Daher kann das Fahrzeug auch als Militärfahrzeug bezeichnet werden. Das Fahrzeug kann einen Allradantrieb aufweisen. Daher kann das Fahrzeug auch als Allradfahrzeug bezeichnet werden. Das Fahrzeug ist insbesondere ein chassisbasiertes Fahrzeug und kann daher auch als solches bezeichnet werden.

Unter "Anschlagmitteln" sind vorliegend Einrichtungen zu verstehen, welche eine Verbindung zwischen einer Last, vorliegend dem Fahrzeug, und einem Hebezeug, wie beispielsweise einem Kran oder einer Winde, herstellen. Anschlagmittel können beispielsweise Gurte, Seile, Ketten, Hebebänder, Hebegurtschlingen, Rundschlingen und lösbare Verbindungsteile, wie beispielsweise Schäkel oder Wirbel, sein. Vorliegend kommen als Anschlagmittel beispielsweise Seile, insbesondere Drahtseile, Gurte, insbesondere Textilgurte, Ketten oder auch Biegestäbe zur Anwendung. Unter einem "Biegestab" ist vorliegend ein stabförmiges Bauteil zu verstehen, welches durch das Aufbringen einer Kraft elastisch verformt, insbesondere verbogen, werden kann.

Dass die Anschlagmittel mit dem Fahrgestellrahmen des Fahrzeugs "verbindbar" sind, bedeutet vorliegend, dass die Anschlagmittel mit dem Fahrgestellrahmen verbunden werden können. Hierzu kann beispielsweise zwischen den Anschlagmitteln und dem Fahrgestellrahmen jeweils eine Schraubverbindung und/oder eine Schweißverbindung vorgesehen sein. Mit anderen Worten können die Anschlagmittel mit dem Fahrgestellrahmen verschraubt und/oder verschweißt sein.

Die Art der Verbindung zwischen den Anschlagmitteln und dem Fahrgestellrahmen ist jedoch beliebig. Insbesondere können die Anschlagmittel an Anbindungspunkten mit dem Fahrgestellrahmen verbunden sein. Die Anzahl der Anschlagmittel ist grundsätzlich beliebig. Insbesondere sind jedoch zumindest drei derartige Anschlagmittel vorgesehen. Es können jedoch auch beispielsweise vier Anschlagmittel vorgesehen sein.

Die Führungselemente sind vorzugsweise hülsenförmig. Die Führungselemente können beispielsweise Rohre mit einem kreisförmigen Querschnitt sein. Alternativ können die Führungselemente auch schachtförmig sein. In diesem Fall können die Führungselemente beispielsweise einen rechteckförmigen, insbesondere einen quadratischen, Querschnitt aufweisen. Die Führungselemente können auch schlauchförmig, beispielsweise in der Form von Textilschläuchen, sein. Die Führungselemente sind nicht zwingend umfänglich geschlossen. Das heißt insbesondere, dass die Führungselemente beispielsweise im Querschnitt auch eine U-förmige Geometrie aufweisen können.

Die Führungselemente können ferner auch Durchbrüche, Ausnehmungen, Bohrungen oder dergleichen aufweisen. Hierdurch können die Führungselemente eine skelettartige, fachwerkartige oder gitterartige Struktur aufweisen. Dies ermöglicht eine Gewichtsreduktion. Die Führungselemente können beispielsweise aus Stahlrohren oder Aluminiumrohren gefertigt sein. Jedem Führungselement ist bevorzugt genau ein Anschlagmittel zugeordnet. Dieses Anschlagmittel ist zumindest abschnittsweise innerhalb des jeweiligen Führungselements des Anschlagmittels angeordnet.

Dass das Anschlagmittel "zumindest abschnittsweise" durch das dem jeweiligen Anschlagmittel zugeordnete Führungselement hindurchgeführt ist, bedeutet vorliegend insbesondere, dass das Anschlagmittel zumindest abschnittsweise innerhalb des jeweiligen Führungselements und zumindest abschnittsweise außerhalb des jeweiligen Führungselements angeordnet sein kann. Das heißt insbesondere, dass die Anschlagmittel nicht über ihre gesamte Länge innerhalb des dem jeweiligen Anschlagmittel zugeordneten Führungselements geführt sein müssen.

Der Fahrgestellrahmen ist insbesondere Teil eines Fahrgestells des Fahrzeugs. Das Fahrgestell kann auch als Chassis des Fahrzeugs bezeichnet werden. Der Fahrzeugaufbau kann auch als Karosserie des Fahrzeugs bezeichnet werden. Der Fahrgestellrahmen trägt den Fahrzeugaufbau. Das bedeutet insbesondere, dass eine Gewichtskraft des Fahrzeugaufbaus in das Fahrgestell oder in den Fahrgestellrahmen eingeleitet wird. Der Fahrzeugaufbau ist insbesondere von dem Fahrgestellrahmen trennbar, so dass der Fahrgestellrahmen oder der Fahrzeugaufbau ausgetauscht werden kann.

Dass die Führungselemente zumindest abschnittsweise durch den Fahrzeugaufbau "hindurchführbar" sind, bedeutet vorliegend insbesondere, dass die Führungselemente in einem montierten Zustand des Anschlagssystems zumindest abschnittsweise durch den Fahrzeugaufbau hindurchverlaufen. Insbesondere umschließt der Fahrzeugaufbau einen Innenraum, in dem sich Besatzungsmitglieder aufhalten können. Die Führungselemente können durch diesen Innenraum hindurchgeführt sein. Ferner können die Führungselemente jedoch auch durch einen Motorraum des Fahrzeugaufbaus hindurchgeführt sein.

Das Anschlagsystem ist insbesondere nachrüstbar. Das heißt, dass das Anschlagsystem an Fahrzeugen angebracht werden kann, die ab Werk kein derartiges Anschlagsystem aufweisen. Alternativ kann das Anschlagsystem jedoch auch bereits ab Werk an dem Fahrzeug montiert werden. Bevorzugt weist das Fahrzeug genau ein derartiges Anschlagsystem auf.

Gemäß einer Ausführungsform sind die Führungselemente innenseitig mit einer reibungsreduzierenden Beschichtung beschichtet.

Die Beschichtung kann beispielsweise ein Gleitmittel sein. Beispielsweise kann für die Beschichtung Kupferpaste eingesetzt werden. Die Beschichtung kann auch eine innenseitig an den Führungselementen angebrachte Kunststoffbeschichtung, beispielsweise in Form einer Polytetrafluorethylen-Beschichtung (PTFE-Beschichtung), sein. Insbesondere weisen die Anschlagmittel jeweils eine Außenseite auf. Diese Außenseite ist einer jeweiligen Innenseite der Führungselemente zugewandt. Zwischen der Außenseite der Anschlagmittel und der Innenseite der Führungselemente ist jeweils ein Spalt, insbesondere ein Luftspalt, vorgesehen. Dieser Spalt ist zumindest abschnittsweise mit der Beschichtung gefüllt. Die Beschichtung ist dabei insbesondere auf die jeweilige Innenseite der Führungselemente aufgebracht. Wird auf die Anschlagmittel eine Zugkraft aufgebracht, so richten sich diese innerhalb der Führungselemente aus, wobei die Beschichtung diese Ausrichtung der Anschlagmittel vereinfacht.

Gemäß einer weiteren Ausführungsform weisen die Anschlagmittel dem Fahrgestellrahmen abgewandt ösenförmige Anschlagabschnitte auf.

An diesen Anschlagabschnitten können weitere Anschlagmittel, die beispielsweise mit dem Luftfahrzeug, insbesondere mit einem Kran oder einer Winde des Luftfahrzeugs, verbunden werden können, angebracht werden. Die Anschlagabschnitte können beispielsweise eine ringförmige Geometrie aufweisen. Die Anschlagmittel des Luftfahrzeugs können beispielsweise mit Hilfe von Schäkeln oder Haken mit den Anschlagabschnitten der Anschlagmittel des Anschlagsystems lösbar verbunden werden.

Gemäß einer weiteren Ausführungsform sind die Anschlagmittel zumindest abschnittsweise flexibel, wobei die Anschlagmittel insbesondere zumindest abschnittsweise seilförmig, gurtförmig, kettenförmig oder biegestabförmig sind.

Dass die Anschlagmittel "zumindest abschnittsweise flexibel" sind, bedeutet vorliegend insbesondere, dass die Anschlagmittel auch zum Teil unflexibel sein können. Beispielsweise sind die Anschlagabschnitte der Anschlagmittel unflexibel. Zwischen den Anschlagabschnitten und den Anbindungspunkten der Anschlagmittel an den Fahrgestellrahmen, können die Anschlagmittel flexibel sein. Die Anschlagmittel können beispielsweise jeweils in Form eines Seils, insbesondere eines Drahtseils, oder einer Kette ausgebildet sein. Ferner können auch Gurte, insbesondere Textilgurte, als Anschlagmittel verwendet werden.

Gemäß einer weiteren Ausführungsform weisen die Führungselemente dem Fahrgestellrahmen abgewandt trichterförmige Endabschnitte auf.

Die Endabschnitten sind insbesondere an einem Dach des Fahrzeugaufbaus vorgesehen. Hierbei bilden die trichterförmigen Endabschnitte Vertiefungen in dem Dach, in welchen die Anschlagabschnitte der Anschlagmittel aufgenommen sein können. Beispielsweise können die Anschlagabschnitte umgeklappt und in den trichterförmigen Endabschnitten aufgenommen werden, wenn keine Verlastung des Fahrzeugs geplant ist.

Ferner wird ein Fahrzeug mit einem Fahrgestellrahmen, einem Fahrzeugaufbau, den der Fahrgestellrahmen trägt, und einem derartigen Anschlagsystem vorgeschlagen, wobei die Anschlagmittel mit dem Fahrgestellrahmen verbunden sind, und wobei die Führungselemente zumindest abschnittsweise durch den Fahrzeugaufbau hindurchgeführt sind.

Besonders bevorzugt wird ein Fahrzeug mit einem derartigen Anschlagsystem vorgeschlagen. Das Fahrzeug umfasst einen Fahrgestellrahmen, einen Fahrzeugaufbau, den der Fahrgestellrahmen trägt, und ein Anschlagsystem zum Verlasten des Fahrzeugs, wobei das Anschlagsystem mehrere Anschlagmittel, die mit dem Fahrgestellrahmen verbunden sind, und mehrere Führungselemente für die Anschlagmittel aufweist, wobei jedem Führungselement ein Anschlagmittel zugeordnet ist, das zumindest abschnittsweise durch das jeweilige Führungselement hindurchgeführt ist, und wobei die Führungselemente zumindest abschnittsweise durch den Fahrzeugaufbau hindurchgeführt sind.

Wie zuvor erwähnt, ist das Fahrzeug bevorzugt ein Radfahrzeug. Das Fahrzeug kann aber auch ein Kettenfahrzeug sein. Das Fahrzeug ist insbesondere ein Luftlandefahrzeug. Das Fahrzeug kann bewaffnet oder unbewaffnet sein. Das Fahrzeug umfasst insbesondere ein wie zuvor erwähntes Fahrgestell mit mehreren Rädern, welche über Radaufhängungen mit dem Fahrgestellrahmen gekoppelt sind. Zumindest weist das Fahrzeug zwei Radachsen mit insgesamt vier Rädern auf. Das Fahrzeug kann jedoch auch mehr als zwei Radachsen aufweisen. Zumindest eine der Radachsen ist lenkbar. Die Räder können jeweils eine Einzelradaufhängung aufweisen. Die Anschlagmittel können mit dem Fahrgestellrahmen verschraubt oder verschweißt sein. Wie zuvor erwähnt, sind die Führungselemente durch den Fahrzeugaufbau, insbesondere durch den Innenraum des Fahrzeugaufbaus, hindurchgeführt.

Gemäß einer Ausführungsform sind die Führungselemente von einem Boden des Fahrzeugaufbaus zu einem Dach des Fahrzeugaufbaus geführt.

Der Fahrzeugaufbau umfasst neben dem Boden und dem Dach bevorzugt eine Motorhaube, eine Frontscheibe, einen Kühlergrill, eine Rückwand, eine Ladefläche und/oder zwei Seitenwände, an denen Türen zum Betreten des Innenraums des Fahrzeugaufbaus von einer Umgebung des Fahrzeugs aus vorgesehen sind. Die Führungselemente erstrecken sich dabei insbesondere von dem Boden in Richtung des Dachs. Dabei ist es jedoch nicht erforderlich, dass sich die Führungselemente durchgehend von dem Boden hin zu dem Dach erstrecken. Zwischen dem Boden und dem Dach können die Führungselemente auch unterbrochen sein, so dass die Anschlagmittel zumindest abschnittsweise freiliegen. Die Führungselemente können auch durch die Motorhaube und/oder durch die Ladefläche hindurchgeführt sein. Beispielsweise kann jedes Führungselement zwei Führungselementabschnitte aufweisen, von denen eines durch den Boden und das andere durch das Dach hindurchgeführt ist. In diesem Fall kann das jeweilige Anschlagmittel zwischen den beiden Führungselementabschnitten, wie zuvor erwähnt, frei durch den Innenraum geführt sein. Eine vollständige Umhüllung oder Umkapselung der Anschlagmittel mit Hilfe der Führungselemente ist somit innerhalb des Innenraums nicht zwingend erforderlich. Das jeweilige Führungselement kann somit entlang seiner Längsrichtung nicht durchgehend, sondern unterbrochen oder mehrteilig sein. Dies ist jedoch optional.

Gemäß einer weiteren Ausführungsform sind die Führungselemente mit dem Boden und/oder mit dem Dach verbunden.

Beispielsweise sind die Führungselemente mit dem Boden und mit dem Dach verbunden. Alternativ können die Führungselemente auch nur mit dem Boden oder nur mit dem Dach verbunden sein. Beispielsweise können die Führungselemente in den Boden und/oder in das Dach eingeschweißt sein. Alternativ kann auch eine Schraubverbindung vorgesehen sein.

Gemäß einer weiteren Ausführungsform weist der Fahrgestellrahmen Längsträger und senkrecht zu den Längsträgern angeordnete Querträger auf, wobei die Anschlagmittel mit den Längsträgern und/oder mit den Querträgern verbunden sind.

Dem Fahrzeug ist insbesondere ein Koordinatensystem mit einer ersten Raumrichtung, Längsrichtung oder x-Richtung, einer zweiten Raumrichtung, Querrichtung oder y-Richtung und einer dritten Raumrichtung, Hochrichtung oder z-Richtung zugeordnet. Die Richtungen sind senkrecht zueinander orientiert. Vorzugsweise erstrecken sich die Längsträger entlang der Längsrichtung. Die Querträger erstrecken sich bevorzugt senkrecht zu der Längsrichtung entlang der Querrichtung. Dabei können die Querträger mit den Längsträgern fest verbunden, insbesondere verschraubt und/oder verschweißt, sein. Durch den Aufbau des Fahrgestellrahmens mit den Längsträgern und den Querträgern ergibt sich ein leiterartiger Aufbau des Fahrgestellrahmens. Der Fahrgestellrahmen ist demgemäß ein Leiterrahmen oder kann auch als solcher bezeichnet werden. Demgemäß sind die Begriffe "Fahrgestellrahmen" und "Leiterrahmen" beliebig gegeneinander tauschbar. Unter "senkrecht" ist vorliegend insbesondere ein Winkel von 90° ± 10°, bevorzugt von 90° ± 5°, weiter bevorzugt von 90° ± 3°, weiter bevorzugt von 90° ± 1°, weiter bevorzugt von genau 90°, zu verstehen.

Gemäß einer weiteren Ausführungsform weist das Fahrzeug Fahrgestellrahmen-Fahrzeugaufbau-Schnittstellen auf, mit deren Hilfe der Fahrgestellrahmen mit dem Fahrzeugaufbau verbunden ist.

Die Fahrgestellrahmen-Fahrzeugaufbau-Schnittstellen sind vorzugsweise lösbar. Beispielsweise sind die Fahrgestellrahmen-Fahrzeugaufbau-Schnittstellen Schraubverbindungen, die zwischen dem Fahrgestellrahmen und dem Fahrzeugaufbau vorgesehen sind. Hierdurch kann der Fahrgestellrahmen oder der Fahrzeugaufbau ausgetauscht werden. Die Anzahl der Fahrgestellrahmen-Fahrzeugaufbau-Schnittstellen ist beliebig. Besonders bevorzugt sind jedoch zumindest vier derartige Fahrgestellrahmen-Fahrzeugaufbau-Schnittstellen vorgesehen. Über die Fahrgestellrahmen-Fahrzeugaufbau-Schnittstellen erfolgt eine Krafteinleitung von dem Fahrzeugaufbau in den Fahrgestellrahmen und von dem Fahrgestellrahmen in den Fahrzeugaufbau.

Gemäß einer weiteren Ausführungsform sind die Fahrgestellrahmen-Fahrzeugaufbau-Schnittstellen zwischen Anbindungspunkten, an denen die Anschlagmittel mit dem Fahrgestellrahmen verbunden sind, angeordnet.

Insbesondere sind die Fahrgestellrahmen-Fahrzeugaufbau-Schnittstellen entlang der Längsrichtung betrachtet zwischen den Anbindungspunkten angeordnet. Die Anbindungspunkte können beispielsweise zwischen den Anschlagmitteln und dem Fahrgestellrahmen vorgesehene Schweißverbindungen oder Schraubverbindungen sein. Die Anzahl der Anbindungspunkte entspricht bevorzugt der Anzahl der Anschlagmittel. Beispielsweise sind vier Anschlagmittel und demgemäß auch vier Anbindungspunkte vorgesehen. Die Anbindungspunkte können an den Längsträgern und/oder an den Querträgern vorgesehen sein. Das kann insbesondere heißen, dass alle Anbindungspunkte an den Längsträgern vorgesehen sind, dass alle Anbindungspunkte an den Querträgern vorgesehen sind, oder dass einige Anbindungspunkte an den Längsträgern und einige Anbindungspunkte an den Querträgern vorgesehen sind.

Gemäß einer weiteren Ausführungsform weist das Anschlagsystem zumindest drei Anschlagmittel auf.

Insbesondere kann das Anschlagsystem genau drei Anschlagmittel aufweisen. In diesem Fall können zwei der Anschlagmittel mit den Längsträgern und eines der Anschlagmittel mit einem der Querträger verbunden sein. Wie zuvor erwähnt, kann das Anschlagsystem jedoch auch mehr als drei Anschlagmittel, beispielsweise vier Anschlagmittel, aufweisen. Es können auch mehr als vier Anschlagmittel vorgesehen sein. In diesem Fall sind auch mehr als vier Führungselemente vorgesehen.

Gemäß einer weiteren Ausführungsform weist das Anschlagsystem ein erstes Anschlagmittel, ein zweites Anschlagmittel und ein drittes Anschlagmittel auf, wobei das zweite Anschlagmittel und das dritte Anschlagmittel entlang einer Querrichtung des Fahrzeugs betrachtet voneinander beabstandet angeordnet sind, und wobei das erste Anschlagmittel entlang einer senkrecht zu der Querrichtung orientierten Längsrichtung des Fahrzeugs von dem zweiten Anschlagmittel und dem dritten Anschlagmittel beabstandet angeordnet ist.

Besonders bevorzugt sind in diesem Fall genau drei Anschlagmittel vorgesehen. Das erste Anschlagmittel ist insbesondere im Bereich einer Vorderachse oder ersten Radachse des Fahrzeugs angeordnet. Das zweite Anschlagmittel und das dritte Anschlagmittel können im Bereich einer zweiten Radachse oder Hinterachse des Fahrzeugs angeordnet sein. Alternativ ist auch eine umgekehrte Anordnung möglich. Entlang der Querrichtung betrachtet sind das zweite Anschlagmittel und das dritte Anschlagmittel voneinander beabstandet platziert. Beispielsweise sind das zweite Anschlagmittel und das dritte Anschlagmittel mit den beiden Längsträgern des Fahrgestellrahmens verbunden. In diesem Fall kann das erste Anschlagmittel beispielsweise mit einem der Querträger des Fahrgestellrahmens verbunden sein.

Gemäß einer weiteren Ausführungsform ist das erste Anschlagmittel entlang der Querrichtung betrachtet zwischen dem zweiten Anschlagmittel und dem dritten Anschlagmittel angeordnet.

Besonders bevorzugt ist das erste Anschlagmittel entlang der Querrichtung betrachtet mittig zwischen dem zweiten Anschlagmittel und dem dritten Anschlagmittel platziert.

Gemäß einer weiteren Ausführungsform verlaufen die Anschlagmittel sowie die Führungselemente parallel und/oder schräg zu einer Hochrichtung des Fahrzeugs.

Beispielsweise können sämtliche Anschlagmittel sowie sämtliche Führungselemente parallel zu der Hochrichtung verlaufen. Alternativ können sämtliche Anschlagmittel sowie sämtliche Führungselemente auch schräg zu der Hochrichtung verlaufen. Dabei können die Anschlagmittel sowie die Führungselemente in einer von der Längsrichtung und der Hochrichtung aufgespannten Ebene schräg angeordnet sein. Ferner ist auch eine schräge Anordnung der Anschlagmittel sowie der Führungselemente in einer von der Hochrichtung und der Querrichtung aufgespannten Ebene möglich. Ferner ist es auch möglich, dass einige Anschlagmittel parallel und andere Anschlagmittel schräg zu der Hochrichtung verlaufen.

Die für das vorgeschlagene Anschlagsystem beschriebenen Ausführungsformen und Merkmale gelten für das vorgeschlagene Fahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und unten möglich, soweit nichts Gegenteiliges angegeben ist.

Weitere mögliche Implementierungen des Anschlagsystems und/oder des Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Anschlagsystems und/oder des Fahrzeugs hinzufügen.

Weitere vorteilhafte Ausgestaltungen und Aspekte des Anschlagsystems und/oder des Fahrzeugs sind Gegenstand der Unteransprüche sowie der im Folgenden beschriebenen Ausführungsbeispiele des Anschlagsystems und/oder des Fahrzeugs. Im Weiteren werden das Anschlagsystem und/oder das Fahrzeug anhand von bevorzugten Ausführungsformen unter Bezugnahme auf die beigelegten Figuren näher erläutert.
- Fig. 1: zeigt eine schematische Seitenansicht einer Ausführungsform eines Fahrzeugs;
- Fig. 2: zeigt eine schematische Aufsicht des Fahrzeugs gemäß Fig. 1;
- Fig. 3: zeigt eine schematische Vorderansicht des Fahrzeugs gemäß Fig. 1;
- Fig. 4: zeigt eine schematische Schnittansicht einer Ausführungsform eines Anschlagsystems für das Fahrzeug gemäß Fig. 1;
- Fig. 5: zeigt eine schematische Aufsicht einer weiteren Ausführungsform eines Fahrzeugs;
- Fig. 6: zeigt eine schematische Seitenansicht einer weiteren Ausführungsform eines Fahrzeugs; und
- Fig. 7: zeigt eine schematische Vorderansicht des Fahrzeugs gemäß Fig. 6.

In den Figuren sind gleiche oder funktionsgleiche Elemente mit denselben Bezugszeichen versehen worden, sofern nichts anderes angegeben ist.

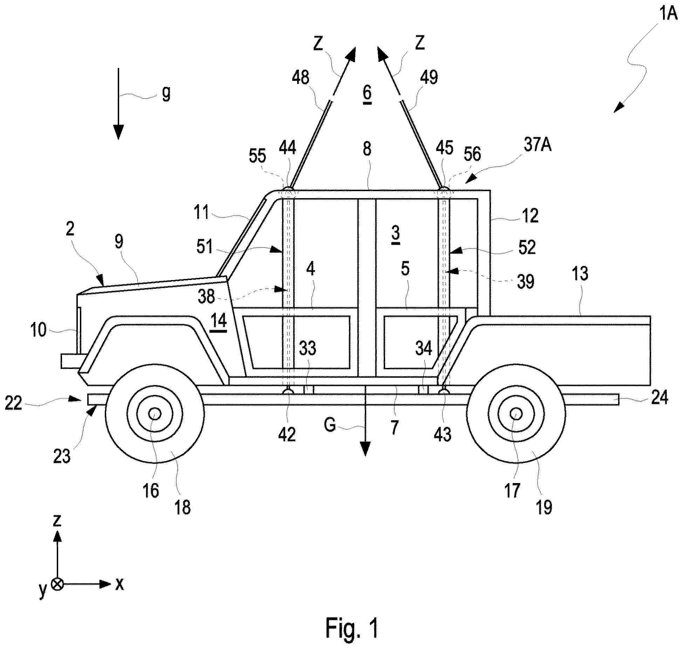

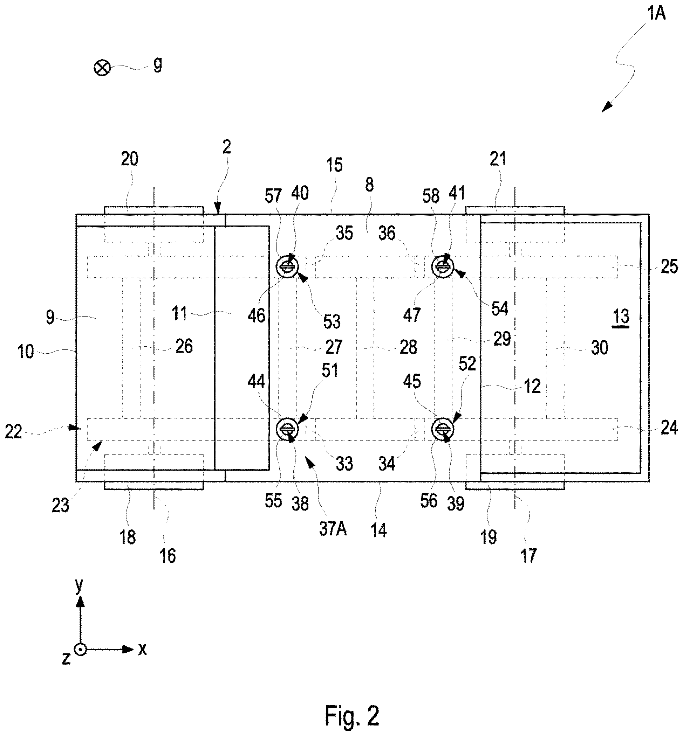

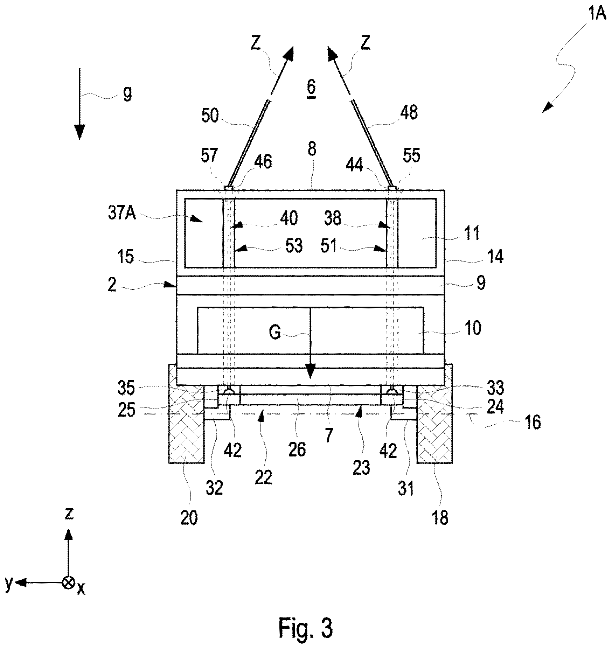

Die Fig. 1 zeigt eine schematische Seitenansicht einer Ausführungsform eines Fahrzeugs 1A. Die Fig. 2 zeigt eine schematische Aufsicht des Fahrzeugs 1A. Die Fig. 3 zeigt eine schematische Vorderansicht des Fahrzeugs 1A. Im Folgenden wird auf die Fig. 1 bis 3 gleichzeitig Bezug genommen.

Dem Fahrzeug 1A ist ein Koordinatensystem mit einer ersten Raumrichtung, Längsrichtung oder x-Richtung x, einer zweiten Raumrichtung, Querrichtung oder y-Richtung y oder einer dritten Raumrichtung, Hochrichtung oder z-Richtung z zugeordnet. Die Richtungen x, y, z sind senkrecht zueinander orientiert. Eine Schwerkraftrichtung g kann im Wesentlichen entgegen der z-Richtung z orientiert sein. Eine Gewichtskraft G des Fahrzeugs 1A wirkt entlang der Schwerkraftrichtung g.

Das Fahrzeug 1A kann ein militärisches Fahrzeug, insbesondere ein Luftlandefahrzeug, sein. Das Fahrzeug 1A kann daher auch als Militärfahrzeug bezeichnet werden. Das Fahrzeug 1A kann ein Personenkraftwagen oder ein Nutzfahrzeug sein. Das Fahrzeug 1A ist ein chassisbasiertes Fahrzeug und kann daher auch als solches bezeichnet werden. Das Fahrzeug 1A kann ferner auch als Luftlandefahrzeug bezeichnet werden. Unter einem "Luftlandefahrzeug " ist vorliegend ein Fahrzeug zu verstehen, welches mit Hilfe eines Luftfahrzeugs, beispielsweise mit Hilfe eines Helikopters, verlastet werden kann. Dabei wird das Fahrzeug 1A insbesondere als Außenlast des Luftfahrzeugs verlastet. Das Fahrzeug 1A kann bewaffnet oder unbewaffnet sein.

Das Fahrzeug 1A umfasst einen Fahrzeugaufbau 2. Der Fahrzeugaufbau 2 kann auch als Karosserie oder als Fahrzeugzelle bezeichnet werden. Die Begriffe "Fahrzeugaufbau", "Karosserie" und "Fahrzeugzelle" sind daher beliebig gegeneinander tauschbar. Der Fahrzeugaufbau 2 kann gepanzert sein. In diesem Fall ist der Fahrzeugaufbau 2 insbesondere gegen Beschuss, Sprengfallen, unkonventionelle Spreng- oder Brandvorrichtungen (USBV, engl.: Improvised Explosive Devices, IED), Minen oder dergleichen geschützt. Dies ist jedoch nicht zwingend erforderlich. Im Folgenden wird davon ausgegangen, dass der Fahrzeugaufbau 2 nicht geschützt ist.

Der Fahrzeugaufbau 2 kann skelettartig aufgebaut sein. Der Fahrzeugaufbau 2 umschließt oder umgrenzt einen Fahrzeuginnenraum oder Innenraum 3, in dem sich eine Besatzung des Fahrzeugs 1A aufhalten kann. Für die Besatzung können in dem Innenraum 3 Sitze (nicht gezeigt) montiert sein. Der Innenraum 3 kann beispielsweise über Türen 4, 5 von einer Umgebung 6 des Fahrzeugs 1A her zugänglich sein.

Der Fahrzeugaufbau 2 weist einen Boden 7 und ein dem Boden 7 abgewandtes Dach 8 auf. Ferner umfasst der Fahrzeugaufbau 2 eine Motorhaube 9, einen Kühlergrill 10, eine Windschutzscheibe oder Frontscheibe 11, eine Rückwand 12 sowie eine Ladefläche 13. Ferner umfasst der Fahrzeugaufbau 2 zwei Seitenwände 14, 15, an denen die Türen 4, 5 verschwenkbar angeschlagen sein können. Die Frontscheibe 11 ist optional. Für den Fall, dass eine Frontscheibe 11 vorhanden ist, kann diese in der Orientierung der Fig. 1 nach vorne auf die Motorhaube 9 heruntergeklappt werden. Zumindest die Frontscheibe 11 kann geschützt sein.

Das Fahrzeug 1A kann ein Radfahrzeug oder ein Kettenfahrzeug sein. Nachfolgend wird jedoch davon ausgegangen, dass das Fahrzeug 1A ein Radfahrzeug ist. Das Fahrzeug 1A umfasst mehrere Radachsen 16, 17, an denen Räder 18, 19, 20, 21 angebracht sind. Beispielsweise sind zwei Radachsen 16, 17 mit vier Rädern 18, 19, 20, 21 vorgesehen. Insbesondere ist eine Vorderachse oder erste Radachse 16 und eine Hinterachse oder zweite Radachse 17 vorgesehen. Es können jedoch auch mehr als zwei Radachsen 16, 17 vorgesehen sein. Jeder Radachse 16, 17 sind zwei Räder 18, 19, 20, 21 zugeordnet. Zumindest die Räder 18, 20 sind lenkbar. Es können jedoch auch alle Räder 18, 19, 20, 21 lenkbar sein. Vorzugsweise umfasst das Fahrzeug 1A einen Allradantrieb. Das heißt, alle Radachsen 16, 17 sind angetrieben.

Die Radachsen 16, 17 sowie die Räder 18, 19, 20, 21 sind Teile eines Chassis oder Fahrgestells 22 des Fahrzeugs 1A. Das Fahrgestell 22 umfasst einen Fahrgestellrahmen 23, der sich entlang der x-Richtung x erstreckt. Der Fahrgestellrahmen 23 ist ein Leiterrahmen. Vorliegend können daher die Begriffe "Fahrgestellrahmen" und "Leiterrahmen" beliebig gegeneinander getauscht werden.

Der Fahrgestellrahmen 23 umfasst zwei entlang der x-Richtung x verlaufende und entlang der y-Richtung y voneinander beabstandet angeordnete Längsträger 24, 25. Die Längsträger 24, 25 können beispielsweise Rechteckprofile oder Rohre sein. Beispielsweise können die Längsträger 24, 25 aus einer Stahllegierung oder aus einer Aluminiumlegierung gefertigt sein. Senkrecht zu den Längsträgern 24, 25 sind mehrere Querträger 26, 27, 28, 29, 30 angeordnet. Die Querträger 26, 27, 28, 29, 30 verlaufen somit entlang der y-Richtung y. Die Anzahl der Querträger 26, 27, 28, 29, 30 ist beliebig. Die Querträger 26, 27, 28, 29, 30 sind fest mit den Längsträgern 24, 25 verbunden. Beispielsweise sind die Querträger 26, 27, 28, 29, 30 mit den Längsträgern 24, 25 verschraubt und/oder verschweißt. Mit Hilfe der entlang der x-Richtung x verlaufenden Längsträger 24, 25 und der entlang der y-Richtung y verlaufenden Querträger 26, 27, 28, 29, 30 ergibt sich der leiterförmige Aufbau des Fahrgestellrahmens 23.

Neben dem Fahrgestellrahmen 23 umfasst das Fahrgestell 22 mehrere Radaufhängungen 31, 32 (Fig. 3), wobei jedem Rad 18, 19, 20, 21 eine derartige Radaufhängung 31, 32 zugeordnet ist. Das heißt insbesondere, dass vier derartige Radaufhängungen 31, 32 vorgesehen sind. Die Radaufhängungen 31, 32 können beispielsweise als Einzelradaufhängungen für die Räder 18, 19, 20, 21 ausgeführt sein. Beispielsweise weist eine derartige Radaufhängung 31, 32 jeweils einen unteren Querlenker, einen oberen Querlenker sowie einen Achsschenkel auf. Die Radaufhängungen 31, 32 können ferner Federn, Dämpfer, Stabilisatoren oder dergleichen aufweisen.

Der Fahrzeugaufbau 2 wird von dem Fahrgestell 22, insbesondere von dem Fahrgestellrahmen 23, getragen. Das heißt insbesondere, dass das Fahrgestell 22 eine Gewichtskraft des Fahrzeugaufbaus 2 aufnimmt. Der Fahrzeugaufbau 2 ist von dem Fahrgestell 22 trennbar. Beispielsweise ist der Fahrzeugaufbau 2 mit dem Fahrgestell 22, insbesondere mit dem Fahrgestellrahmen 23, verschraubt. Das heißt insbesondere, dass der Fahrzeugaufbau 2 oder das Fahrgestell 22 ausgetauscht werden können.

Zum Verbinden des Fahrzeugaufbaus 2 mit dem Fahrgestell 22 oder mit dem Fahrgestellrahmen 23 sind mehrere Fahrgestellrahmen-Fahrzeugaufbau-Schnittstellen 33, 34, 35, 36 vorgesehen. Die Fahrgestellrahmen-Fahrzeugaufbau-Schnittstellen 33, 34, 35, 36 können beispielsweise als Verschraubungen ausgeführt sein, mit deren Hilfe der Fahrzeugaufbau 2, insbesondere der Boden 7 des Fahrzeugaufbaus 2, mit dem Fahrgestell 22 oder mit dem Fahrgestellrahmen 23 verbunden ist. Die Anzahl der Fahrgestellrahmen-Fahrzeugaufbau-Schnittstellen 33, 34, 35, 36 ist beliebig. Insbesondere sind jedoch zumindest vier derartige Fahrgestellrahmen-Fahrzeugaufbau-Schnittstellen 33, 34, 35, 36 vorgesehen.

Beispielsweise verbinden die Fahrgestellrahmen-Fahrzeugaufbau-Schnittstellen 33, 34, 35, 36 die Längsträger 24, 25 mit dem Fahrzeugaufbau 2, insbesondere mit dessen Boden 7. Die Fahrgestellrahmen-Fahrzeugaufbau-Schnittstellen 33, 35 und die Fahrgestellrahmen-Fahrzeugaufbau-Schnittstellen 34, 36 sind entlang der x-Richtung x betrachtet voneinander beabstandet angeordnet. Ferner sind die Fahrgestellrahmen-Fahrzeugaufbau-Schnittstellen 33, 34 und die Fahrgestellrahmen-Fahrzeugaufbau-Schnittstellen 35, 36 entlang der y-Richtung y voneinander beabstandet platziert.

Zum Verlasten unter einem Luftfahrzeug können an dem Fahrzeug 1A geeignete Anschlagmittel, wie beispielsweise Gurte oder Ketten, angeschlagen werden. Die Anschlagmittel können gemäß betriebsinternen Kenntnissen beispielsweise an dem Dach 8 oder dem Dach 8 nahen Bauteilen befestigt werden. Dazu kann das Fahrzeug 1A an dem Dach 8 mit entsprechenden Ösen ausgestattet werden. Wird nun auf die Anschlagmittel eine Zugkraft aufgebracht, wird das Fahrzeug 1A an dem Fahrzeugaufbau 2 nach oben gezogen.

Dadurch wird das Fahrgestell 22 von dem Fahrzeugaufbau 2 her in die Höhe gezogen. Das Fahrgestell 22 hängt dann nur über die Fahrgestellrahmen-Fahrzeugaufbau-Schnittstellen 33, 34, 35, 36 an dem Fahrzeugaufbau 2, wodurch die Fahrgestellrahmen-Fahrzeugaufbau-Schnittstellen 33, 34, 35, 36 mechanisch belastet werden. Diese Belastungen sind nur schwer mit den üblichen Lastkollektiven für derartige Fahrgestellrahmen-Fahrzeugaufbau-Schnittstellen 33, 34, 35, 36 zwischen dem Fahrzeugaufbau 2 und dem Fahrgestell 22 vereinbar. Es ist daher wünschenswert, die Fahrgestellrahmen-Fahrzeugaufbau-Schnittstellen 33, 34, 35, 36 mechanisch zu entlasten.

Bei einer Befestigung der Anschlagmittel direkt an dem Fahrgestell 22 ergäbe sich die Problematik, die Anschlagmittel dann aufwändig an den Seitenwänden 14, 15 des Fahrzeugaufbaus 2 entlang nach oben in Richtung des Luftfahrzeugs zu führen, um bei Bewegungen des Fahrzeugs 1A während des Verlastens desselben ein Durchscheuern der Anschlagmittel an den Seitenwänden 14, 15 und Kanten, wie beispielsweise Dachkanten, zu vermeiden. Hierzu könnten Schienen, Ösen oder Rollen zum Einsatz kommen, um die Anschlagmittel nach oben zu führen. Diese zusätzlichen Bauteile hätten jedoch einen negativen Einfluss auf eine Gewichtsbilanz und eine Fahrzeugbreite des Fahrzeugs 1A. Ferner wäre es auch grundsätzlich möglich, die Anschlagmittel über Ösen an einem Heck und einer Front des Fahrzeugs 1A zu befestigen.

Die vorgenannten Lösungsansätze erfordern jedoch, dass entweder bei dem Anbringen der Anschlagmittel direkt an dem Fahrgestell 22 eine wie oben beschriebene Führung der Anschlagmittel außen entlang des Fahrzeugaufbaus 2 notwendig wird oder bei dem Anbringen der Anschlagmittel an dem Dach 8 eine sehr hohe Belastung der Fahrgestellrahmen-Fahrzeugaufbau-Schnittstellen 33, 34, 35, 36 stattfindet. Gegebenenfalls notwendige Führungshilfen für die Anschlagmittel an den Seitenwänden 14, 15 des Fahrzeugsaufbaus 2 führen zu einem größeren Fahrzeuggewicht und zu einer größeren Fahrzeugbreite. Dies stellt ein Risiko für die Zulassungsfähigkeit des Fahrzeugs 1A dar. Dies gilt es zu verbessern.

Um das Fahrzeug 1A mit Hilfe eines wie zuvor erwähnten Luftfahrzeugs ohne die zuvor erwähnten Nachteile verlasten zu können, weist das Fahrzeug 1A ein Anschlagsystem 37A auf. Das Anschlagsystem 37A weist mehrere Anschlagmittel 38, 39, 40, 41 auf, welche fest mit dem Fahrgestellrahmen 23 verbunden sind. Unter einem "Anschlagmittel" ist vorliegend ein Bauteil zu verstehen, das nicht zu einem Hebezeug, wie beispielsweise einer Winde oder einem Kran des Luftfahrzeugs, gehört und das eine Verbindung zwischen dem Hebezeug und einer Last, vorliegend dem Fahrzeug 1A, ermöglicht.

Die Anzahl der Anschlagmittel 38, 39, 40, 41 ist beliebig. Insbesondere sind jedoch zumindest drei derartige Anschlagmittel 38, 39, 40, 41 vorgesehen. Im vorliegenden Fall weist das Anschlagsystem 37A genau vier derartige Anschlagmittel 38, 39, 40, 41 auf, welche an Anbindungspunkten 42, 43 (Fig. 1 und 3) mit dem Fahrgestellrahmen 23, insbesondere mit den Längsträgern 24, 25, verbunden sind. Die Anbindungspunkte 42, 43 können beispielsweise Schweißverbindungen oder Schraubverbindungen sein.

Beispielsweise sind genau vier Anbindungspunkte 42, 43 vorgesehen, von denen in den Fig. 1 und 3 nur jeweils zwei gezeigt sind. Insbesondere sind zwei Anbindungspunkte 42 (Fig. 3) und zwei Anbindungspunkte 43, von denen in der Fig. 1 jedoch nur einer gezeigt ist, vorgesehen. Die Anbindungspunkte 42 und die Anbindungspunkte 43 sind bevorzugt baugleich. Die Anbindungspunkte 42 können als erste Anbindungspunkte bezeichnet werden. Die Anbindungspunkte 43 können als zweite Anbindungspunkte bezeichnet werden.

Die Anbindungspunkte 42, 43 können Teil des Fahrgestellrahmens 23, insbesondere der Längsträger 24, 25, sein. Jedem Längsträger 24, 25 sind zwei Anbindungspunkte 42, 43 zugeordnet. Entlang der x-Richtung x betrachtet können die Fahrgestellrahmen-Fahrzeugaufbau-Schnittstellen 33, 34, 35, 36 zwischen den Anbindungspunkten 42, 43 platziert sein. Dies ist jedoch nicht zwingend erforderlich. Entlang der z-Richtung z betrachtet können die Fahrgestellrahmen-Fahrzeugaufbau-Schnittstellen 33, 34, 35, 36 und die Anbindungspunkte 42, 43 auch übereinander angeordnet sein.

Die Anschlagmittel 38, 39, 40, 41 sind vorzugsweise als Seile, insbesondere als Drahtseile, ausgeführt. Alternativ können die Anschlagmittel 38, 39, 40, 41 auch als Ketten oder Gurte, insbesondere Textilgurte, ausgeführt sein. Außerdem können die Anschlagmittel 38, 39, 40, 41 auch als Biegestäbe ausgeführt sein. Unter einem "Biegestab" ist vorliegend ein stabförmiges Bauteil zu verstehen, welches durch das Aufbringen einer Kraft elastisch verformt werden kann.

Die Anzahl der Anbindungspunkte 42, 43 entspricht der Anzahl der Anschlagmittel 38, 39, 40, 41. Das heißt insbesondere, dass vier Anbindungspunkte 42, 43 vorgesehen sind. In den Fig. 1 und 3 sind jedoch nur jeweils zwei dieser Anbindungspunkte 42, 43 gezeigt. Die Anbindungspunkte 42, 43 können beispielsweise an dem Fahrgestellrahmen 23 angebrachte Bauelemente, beispielsweise in der Form von Ösen oder Schlaufen, sein oder aufweisen, in welche die Anschlagmittel 38, 39, 40, 41 eingehängt werden können, um die Anschlagmittel 38, 39, 40, 41an den Anbindungspunkten 42, 43 mit dem Fahrgestell 22, insbesondere mit dem Fahrgestellrahmen 23, zu verbinden.

Wie zuvor erwähnt, sind die Anschlagmittel 38, 39, 40, 41 an den Anbindungspunkten 42, 43 bevorzugt fest mit dem Fahrgestellrahmen 23 verbunden. Dem Fahrgestellrahmen 23 abgewandt weist jedes Anschlagmittel 38, 39, 40, 41 einen ösenförmigen Anschlagabschnitt 44, 45, 46, 47 auf. An den Anschlagabschnitten 44, 45, 46, 47 können beispielsweise mit Hilfe eines Schäkels oder eines Hakens weitere Anschlagmittel 48, 49, 50 angebracht werden, welche mit dem Luftfahrzeug, insbesondere mit dessen Winde, verbunden werden. Es sind vier Anschlagmittel 48, 49, 50 vorgesehen, von denen in den Fig. 1 und 3 jedoch nur drei gezeigt sind. Die Anschlagmittel 48, 49, 50 können grundsätzlich Teil des Anschlagsystems 37A sein. Die Anschlagmittel 48, 49, 50 sind vorliegend jedoch bevorzugt nicht Teil des Anschlagsystems 37A.

Das Anschlagsystem 35A weist ferner mehrere Führungselemente 51, 52, 53, 54 auf. Die Führungselemente 51, 52, 53, 54 können hülsenförmig ausgebildet sein. Insbesondere können die Führungselemente 51, 52, 53, 54 rohrförmig oder schachtförmig sein. Die Führungselemente 51, 52, 53, 54 können im Querschnitt eine ringförmige oder eine rechteckförmige, insbesondere eine quadratische, Geometrie aufweisen. Die Führungselemente 51, 52, 53, 54 und die die Anschlagmittel 38, 39, 40, 41 verlaufen entlang der z-Richtung z oder parallel zu dieser.

Die Führungselemente 51, 52, 53, 54 müssen umfänglich jedoch nicht geschlossen sein. Die Führungselemente 51, 52, 53, 54 können im Querschnitt somit beispielsweise auch U-förmig sein. Die Führungselemente 51, 52, 53, 54 können eine Vielzahl von Durchbrüchen oder Ausschnitten aufweisen, so dass die Führungselemente 51, 52, 53, 54 skelettartig, fachwerkartig oder käfigartig ausgestaltet sein können. Dies kann aus Gründen der Gewichtsreduktion vorteilhaft sein. Die Führungselemente 51, 52, 53, 54 können aus einer Stahllegierung, aus einer Leichtmetalllegierung, insbesondere aus einer Aluminiumlegierung, und/oder aus Faserverbundwerkstoffen gefertigt sein.

In den Führungselementen 51, 52, 53, 54 sind die Anschlagmittel 38, 39, 40, 41 geführt. Das heißt insbesondere, dass die Anschlagmittel 38, 39, 40, 41 von den Führungselementen 51, 52, 53, 54 zumindest abschnittsweise umschlossen sind. Dabei ist jedem Führungselement 51, 52, 53, 54 genau ein Anschlagmittel 38, 39, 40, 41 zugeordnet. Die Anschlagmittel 38, 39, 40, 41 sind dabei innerhalb der Führungselemente 51, 52, 53, 54 angeordnet und durch diese hindurchgeführt.

Die Führungselemente 51, 52, 53, 54 sind zumindest abschnittsweise durch den Fahrzeugaufbau 2 hindurchgeführt. Insbesondere können die Führungselemente 51, 52, 53, 54 durch den Innenraum 3 des Fahrzeugsaufbaus 2 hindurchgeführt sein. Dabei können die Führungselemente 51, 52, 53, 54 von dem Boden 7 zu dem Dach 8 geführt sein. Die Führungselemente 51, 52, 53, 54 können beispielsweise mit dem Boden 7 und/oder mit dem Dach 8 fest verbunden, insbesondere verschweißt, sein. Dabei ist es jedoch nicht erforderlich, dass sich die Führungselemente 51, 52, 53, 54 durchgehend von dem Boden 7 hin zu dem Dach 8 erstrecken. Zwischen dem Boden 7 und dem Dach 8 können die Führungselemente 51, 52, 53, 54 unterbrochen sein, so dass die Anschlagmittel 38, 39, 40, 41 zumindest abschnittsweise freiliegen. Die Führungselemente 51, 52, 53, 54 können auch durch die Motorhaube 9 und/oder durch die Ladefläche 13 hindurchgeführt sein.

Die Führungselemente 51, 52, 53, 54 sind somit insbesondere dazu geeignet, die Anschlagmittel 38, 39, 40, 41 durch den Boden 7 und/oder das Dach 8 hindurchzuführen. Beispielsweise kann jedes Führungselement 51, 52, 53, 54 zwei Führungselementabschnitte aufweisen, von denen eines durch den Boden 7 und das andere durch das Dach 8 hindurchgeführt ist. In diesem Fall kann das jeweilige Anschlagmittel 38, 39, 40, 41 zwischen den beiden Führungselementabschnitten, wie zuvor erwähnt, frei durch den Innenraum 3 geführt sein. Eine vollständige Umhüllung oder Umkapselung der Anschlagmittel 38, 39, 40, 41 mit Hilfe der Führungselemente 51, 52, 53, 54 ist somit innerhalb des Innenraums 3 nicht zwingend erforderlich. Das jeweilige Führungselement 51, 52, 53, 54 kann somit entlang seiner Längsrichtung, die mit der z-Richtung z übereinstimmen kann, nicht durchgehend, sondern unterbrochen oder mehrteilig sein.

Jedem Führungselement 51, 52, 53, 54 kann ein trichterförmiger Endabschnitt 55, 56, 57, 58 zugeordnet sein. Die Endabschnitte 55, 56, 57, 58 können kegelstumpfförmig oder konusförmig sein und bilden an dem Dach 8 Vertiefungen, in welchen die Anschlagabschnitte 44, 45, 46, 47 zumindest abschnittsweise aufgenommen sein können. Beispielsweise können die Anschlagabschnitte 44, 45, 46, 47 in die Endabschnitte 55, 56, 57, 58 hineingeklappt werden, so dass diese nicht über das Dach 8 überstehen.

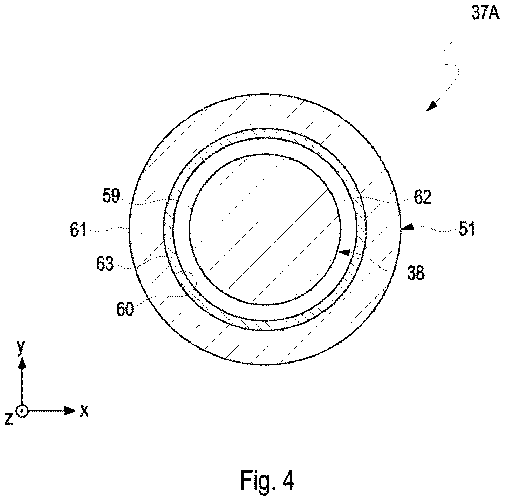

Die Fig. 4 zeigt eine schematische Schnittansicht einer Ausführungsform eines wie zuvor erwähnten Anschlagsystems 37A.

Insbesondere zeigt die Fig. 4 eine Schnittansicht des Anschlagmittels 38 sowie des dem Anschlagmittel 38 zugeordneten Führungselements 51. Das Anschlagmittel 38 ist in diesem Fall beispielsweise ein Drahtseil. Das Führungselement 51 kann ein Rohr mit kreisförmigem Querschnitt sein. Das Anschlagmittel 38 umfasst eine Außenseite 59, die einer Innenseite 60 des Führungselements 51 zugewandt ist. Der Innenseite 60 abgewandt weist das Führungselement 51 eine Außenseite 61 auf.

Zwischen der Außenseite 59 des Anschlagmittels 38 und der Innenseite 60 des Führungselements 51 kann ein Spalt 62 vorgesehen sein. Der Spalt 62 ermöglicht eine Bewegung des Anschlagmittels 38 relativ zu dem Führungselement 51. Der Spalt 62 kann ein Luftspalt sein. Der Spalt 62 ist zumindest abschnittsweise mit einer Beschichtung 63 gefüllt. Die Beschichtung 63 erleichtert ein Gleiten des Anschlagmittels 38 relativ zu dem Führungselement 51, da die Beschichtung 63 die Reibung zwischen der Außenseite 59 des Anschlagmittels 38 und der Innenseite 60 des Führungselements 51 reduziert.

Die Beschichtung 63 kann auf der Innenseite 60 des Führungselements 51 aufgebracht sein. Beispielsweise kann die Beschichtung 63 ein Gleitmittel enthalten. Insbesondere kann die Beschichtung 63 eine Kupferpaste sein oder aufweisen. Die Beschichtung 63 kann ferner auch Grafit umfassen. Die Beschichtung 63 kann jedoch auch eine Kunststoffbeschichtung sein. Beispielsweise kann die Beschichtung 63 als Polytetrafluorethylen-Beschichtung (PTFE-Beschichtung) auf die Innenseite 60 des Führungselements 51 aufgebracht sein.

Die Funktionalität des Anschlagsystems 37A wird nachfolgend erläutert. Die Anschlagmittel 48, 49, 50, die beispielsweise bereits mit der Winde des Luftfahrzeugs verbunden sein können, werden mit den Anschlagabschnitten 44, 45, 46, 47 der Anschlagmittel 38, 39, 40, 41 verbunden. Dies kann beispielsweise mit Hilfe von Schäkeln oder Haken erfolgen.

Über die Anschlagmittel 48, 49, 50 wird nun eine Zugkraft Z auf das Anschlagsystem 37A, insbesondere auf die Anschlagmittel 38, 39, 40, 41, aufgebracht. Dies kann beispielsweise dadurch erfolgen, dass das Luftfahrzeug an Höhe gewinnt. Innerhalb der Führungselemente 51, 52, 53, 54 können sich die Anschlagmittel 38, 39, 40, 41 ausrichten, indem sich diese relativ zu den Führungselementen 51, 52, 53, 54 bewegen. Dies wird mit Hilfe der in dem Spalt 62 vorgesehenen Beschichtung 63 erleichtert.

Das Fahrzeug 1A wird nun über die Anbindungspunkte 42, 43 an dem Fahrgestell 22, insbesondere an dem Fahrgestellrahmen 23, angehoben. Die Gewichtskraft G des Fahrzeugs 1A wird somit über die Anbindungspunkte 42, 43 auf die Anschlagmittel 38, 39, 40, 41 übertragen. Eine Belastung des Fahrzeugaufbaus 2 selbst bei dem Verlasten des Fahrzeugs 1A findet vorteilhafterweise nicht statt.

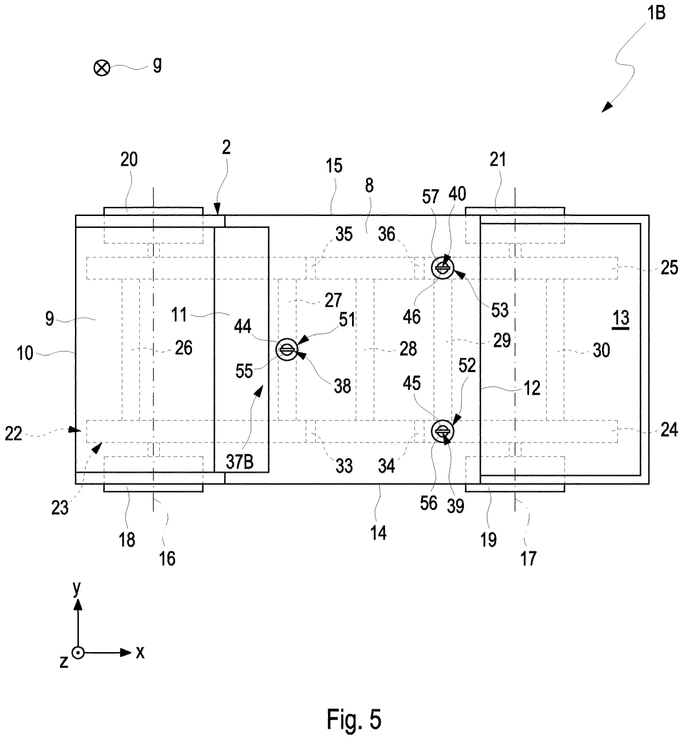

Die Fig. 5 zeigt eine schematische Aufsicht einer weiteren Ausführungsform eines Fahrzeugs 1B.

Das Fahrzeug 1B weist, wie vorher mit Bezug auf das Fahrzeug 1A erläutert, einen Fahrzeugaufbau 2 auf, der von einem wie zuvor erläuterten Fahrgestell 22 getragen wird. Das Fahrzeug 1B unterscheidet sich von dem Fahrzeug 1A nur dadurch, dass das Fahrzeug 1B anstatt des zuvor erläuterten Anschlagsystems 37A eine alternative Ausführungsform eines Anschlusssystems 37B aufweist. Nachfolgend wird daher nur auf Unterschiede zwischen den unterschiedlichen Ausführungsformen des Fahrzeugs 1A, 1B oder des Anschlagsystems 37A, 37B eingegangen. Alle Ausführungen betreffend das Fahrzeug 1A oder das Anschlagsystem 37A sind entsprechend auf das Fahrzeug 1B oder auf das Anschlagsystem 37B und umgekehrt anwendbar.

Das Anschlusssystem 37B unterscheidet sich von dem Anschlusssystem 37A nur dadurch, dass nicht vier Anschlagmittel 38, 39, 40, 41 mit vier Führungselementen 51, 52, 53, 54 vorgesehen sind, sondern dass das Anschlusssystem 37B genau drei Anschlagmittel 38, 39, 40 mit genau drei Führungselementen 51, 52, 53 aufweist. Demgemäß sind auch nicht vier Anbindungspunkte 42, 43 wie bei dem Fahrzeug 1A vorgesehen, sondern nur drei wie zuvor erläuterte Anbindungspunkte 42, 43 (nicht gezeigt).

Dabei ist ein erstes Anschlagmittel 38 mit Hilfe eines der Anbindungspunkte 42, 43 mit dem Querträger 27 des Fahrgestellrahmens 23 verbunden. Ein zweites Anschlagmittel 39 sowie ein drittes Anschlagmittel 40 können mit Hilfe weiterer Anbindungspunkte 42, 43 mit den zuvor erwähnten Längsträgern 24, 25 des Fahrgestellrahmens 23 fest verbunden sein. Entlang der y-Richtung y betrachtet sind das zweite Anschlagmittel 39 und das dritte Anschlagmittel 40 voneinander beabstandet platziert.

Das erste Anschlagmittel 38 ist entlang der x-Richtung x betrachtet von dem zweiten Anschlagmittel 39 und dem dritten Anschlagmittel 40 entfernt angeordnet. Entlang der y-Richtung y betrachtet ist das erste Anschlagmittel 38 insbesondere mittig zwischen dem zweiten Anschlagmittel 39 und dem dritten Anschlagmittel 40 platziert. Die Funktionalität des Anschlagsystems 37B entspricht der des Anschlagsystems 37A.

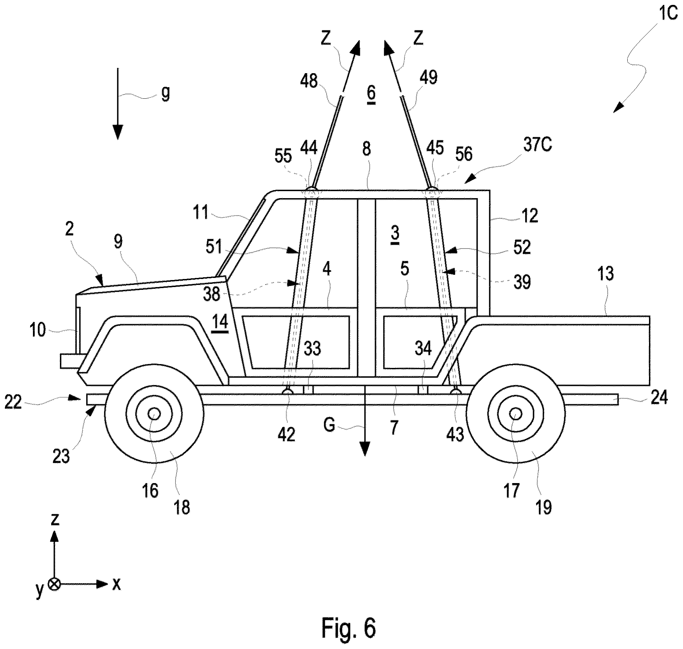

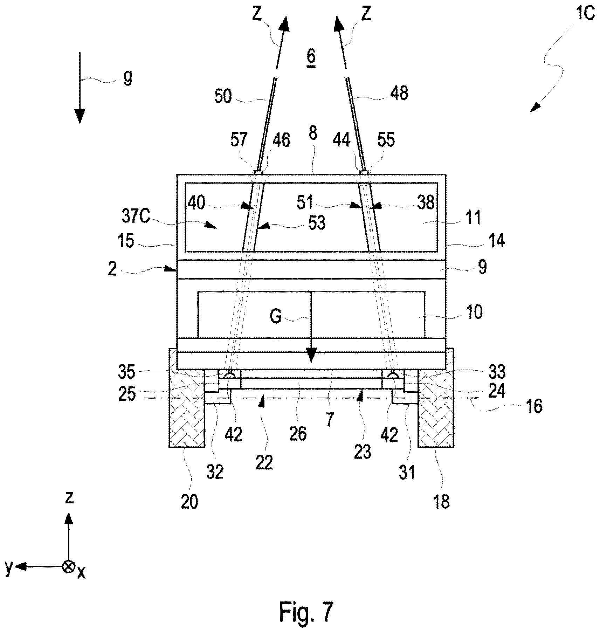

Die Fig. 6 zeigt eine schematische Seitenansicht einer weiteren Ausführungsform eines Fahrzeugs 1C. Die Fig. 7 zeigt eine schematische Vorderansicht des Fahrzeugs 1C. Im Folgenden wird auf die Fig. 6 und 7 gleichzeitig Bezug genommen.

Das Fahrzeug 1C weist, wie vorher mit Bezug auf das Fahrzeug 1A erläutert, einen Fahrzeugaufbau 2 auf, der von einem wie zuvor erläuterten Fahrgestell 22 getragen wird. Das Fahrzeug 1C unterscheidet sich von dem Fahrzeug 1A nur dadurch, dass das Fahrzeug 1C anstatt des zuvor erläuterten Anschlagsystems 37A eine alternative Ausführungsform eines Anschlusssystems 37C aufweist. Nachfolgend wird daher nur auf Unterschiede zwischen den unterschiedlichen Ausführungsformen des Fahrzeugs 1A, 1C oder des Anschlagsystems 37A, 37C eingegangen. Alle Ausführungen betreffend das Fahrzeug 1A, 1B oder das Anschlagsystem 37A, 37B sind entsprechend auf das Fahrzeug 1C oder auf das Anschlagsystem 37C und umgekehrt anwendbar.

Im Unterschied zu dem Anschlagsystem 37A sind bei dem Anschlagsystem 37C die Anschlagmittel 38, 39, 40, 41 sowie die Führungselemente 51, 52, 53, 54 nicht entlang der z-Richtung z oder parallel zu der z-Richtung z orientiert, sondern schräg zu dieser. Dabei können die Anschlagmittel 38, 39, 40, 41 sowie die Führungselemente 51, 52, 53, 54 in einer von der x-Richtung x und der z-Richtung z aufgespannten Ebene schräg angeordnet sein sowie ebenfalls in einer von der z-Richtung z und der y-Richtung y aufgespannten Ebene. Die Funktionalität des Anschlagsystems 37B entspricht der des Anschlagsystems 37A, 37B.

Die unterschiedlichen Ausführungsformen des Anschlagsystems 37A, 37B, 37C führen zu einer Entlastung der Fahrgestellrahmen-Fahrzeugaufbau-Schnittstellen 33, 34, 35, 36 zwischen dem Fahrzeugaufbau 2 und dem Fahrgestell 22 bei einem Verlasten des Fahrzeugs 1A, 1B, 1C unter einem Luftfahrzeug. Eine Beschädigung der Anschlagmittel 38, 39, 40, 41 oder des Fahrzeugs 1A, 1B, 1C durch Reibung zwischen den Anschlagmitteln 38, 39, 40, 41 und dem Fahrzeugsaufbau 2 wird zuverlässig verhindert. Es ergibt sich vorteilhafterweise eine Risikominimierung bei der Zulassung des Fahrzeugs 1A, 1B, 1C hinsichtlich zulässigen Gesamtgewichts und/oder Fahrzeugbreite.

Durch die Führung der fest montierten Anschlagmittel 38, 39, 40, 41 mit Hilfe der Führungselemente 51, 52, 53, 54 ist es möglich, die ungewollte Krafteinleitung in die Fahrgestellrahmen-Fahrzeugaufbau-Schnittstellen 33, 34, 35, 36 zu vermeiden. Das Fahrgestell 22 kann an Punkten, nämlich den Anbindungspunkten 42, 43, belastet werden, an denen ähnliche Krafteinleitungen oder Beanspruchungen, wie zum Beispiel bei einem Aufbocken des Fahrzeugs 1A, 1B, 1C, konstruktiv vorgesehen sind.

Das Schwingungs- oder Pendelverhalten des zu transportierenden Fahrzeugs 1A, 1B, 1C unter dem Luftfahrzeug wird vorteilhafterweise positiv beeinflusst. Da Führungen für Anschlagmittel an den Seitenwänden 14, 15 des Fahrzeugaufbaus 2 entfallen, kann Gewicht eingespart werden. Der zeitliche Aufwand bei dem Verlasten des zu transportierenden Fahrzeugs 1A, 1B, 1C nimmt ab.

Vorteilhafterweise sinkt der Entwicklungsaufwand inklusive des Verifikationsprogramms für die Fahrgestellrahmen-Fahrzeugaufbau-Schnittstellen 33, 34, 35, 36, weil die Zugbelastung zuzüglich der Schwingungskomponente bei der Auslegung entfällt und es bei der Auslegung der Fahrgestellrahmen-Fahrzeugaufbau-Schnittstellen 33, 34, 35, 36 bei einer üblichen Belastung bleibt. Für die Belastung können ausgelegte Bereiche des Fahrgestells 22, nämlich die Anbindungspunkte 42, 43, genutzt werden.

Es wird eine Beschädigung der Anschlagmittel 38, 39, 40, 41 durch Reibung vermieden. Gegebenenfalls notwendige seitliche Führungen für die Anschlagmittel 38, 39, 40, 41 an dem Fahrzeugaufbau 2 können vorteilhafterweise entfallen. Wie zuvor erwähnt, ergibt sich eine Gewichtsersparnis. Ferner ist eine Reduzierung der Fahrzeugbreite möglich oder es ist eine bessere Nutzung der maximal zulässigen Fahrzeugbreite möglich. Zulassungsrisiken werden reduziert. Es ergibt sich eine Zeitersparnis bei dem Verlasten des Fahrzeugs 1A, 1B, 1C. Das Pendelverhalten des Fahrzeugs 1A, 1B, 1C bei dem Verlasten desselben kann positiv beeinflusst werden. Für die Verlastung des Fahrzeugs 1A, 1B, 1C ist keine Zusatzausbildung für geschultes Ladepersonal notwendig. Das Anschlagsystem 37A, 37B, 37C ist wartungsarm und im Falle einer Beschädigung leicht zu reparieren.

Obwohl die vorliegende Erfindung anhand von Ausführungsbeispielen beschrieben wurde, ist sie vielfältig modifizierbar.

### BEZUGSZEICHENLISTE

- 1A: Fahrzeug
- 1B: Fahrzeug
- 1C: Fahrzeug
- 2: Fahrzeugaufbau
- 3: Innenraum
- 4: Tür
- 5: Tür
- 6: Umgebung
- 7: Boden
- 8: Dach
- 9: Motorhaube
- 10: Kühlergrill
- 11: Frontscheibe
- 12: Rückwand
- 13: Ladefläche
- 14: Seitenwand
- 15: Seitenwand
- 16: Radachse
- 17: Radachse
- 18: Rad
- 19: Rad
- 20: Rad
- 21: Rad
- 22: Fahrgestell
- 23: Fahrgestellrahmen
- 24: Längsträger
- 25: Längsträger
- 26: Querträger
- 27: Querträger
- 28: Querträger
- 29: Querträger
- 30: Querträger
- 31: Radaufhängung
- 32: Radaufhängung
- 33: Fahrgestellrahmen-Fahrzeugaufbau-Schnittstelle
- 34: Fahrgestellrahmen-Fahrzeugaufbau-Schnittstelle
- 35: Fahrgestellrahmen-Fahrzeugaufbau-Schnittstelle
- 36: Fahrgestellrahmen-Fahrzeugaufbau-Schnittstelle
- 37A: Anschlagsystem
- 37B: Anschlagsystem
- 37C: Anschlagsystem
- 38: Anschlagmittel
- 39: Anschlagmittel
- 40: Anschlagmittel
- 41: Anschlagmittel
- 42: Anbindungspunkt
- 43: Anbindungspunkt
- 44: Anschlagabschnitt
- 45: Anschlagabschnitt
- 46: Anschlagabschnitt
- 47: Anschlagabschnitt
- 48: Anschlagmittel
- 49: Anschlagmittel
- 50: Anschlagmittel
- 51: Führungselement
- 52: Führungselement
- 53: Führungselement
- 54: Führungselement
- 55: Endabschnitt
- 56: Endabschnitt
- 57: Endabschnitt
- 58: Endabschnitt
- 59: Außenseite
- 60: Innenseite
- 61: Außenseite
- 62: Spalt
- 63: Beschichtung

- g: Schwerkraftrichtung
- G: Gewichtskraft
- x: x-Richtung
- y: y-Richtung
- z: z-Richtung
- Z: Zugkraft

## Patentansprüche

1. Anschlagsystem (37A, 37B, 37C) zum Verlasten eines Fahrzeugs (1A, 1B, 1C), mit
mehreren Anschlagmitteln (38, 39, 40, 41), die mit einem Fahrgestellrahmen (23) des Fahrzeugs (1A, 1B, 1C) verbindbar sind, und
mehreren Führungselementen (51, 52, 53, 54) für die Anschlagmittel (38, 39, 40, 41),
wobei jedem Führungselement (51, 52, 53, 54) ein Anschlagmittel (38, 39, 40, 41) zugeordnet ist, das zumindest abschnittsweise durch das jeweilige Führungselement (51, 52, 53, 54) hindurchgeführt ist, und
wobei die Führungselemente (51, 52, 53, 54) zumindest abschnittsweise durch einen von dem Fahrgestellrahmen (23) getragenen Fahrzeugaufbau (2) des Fahrzeugs (1A, 1B, 1C) hindurchführbar sind.

2. Anschlagsystem nach Anspruch 1,
**dadurch gekennzeichnet,**
**dass** die Führungselemente (51, 52, 53, 54) innenseitig mit einer reibungsreduzierenden Beschichtung (63) beschichtet sind.

3. Anschlagsystem nach Anspruch 1 oder 2,
**dadurch gekennzeichnet,**
**dass** die Anschlagmittel (38, 39, 40, 41) dem Fahrgestellrahmen (23) abgewandt ösenförmige Anschlagabschnitte (44, 45, 46, 47) aufweisen.

4. Anschlagsystem nach einem der Ansprüche 1 - 3,
**dadurch gekennzeichnet,**
**dass** die Anschlagmittel (38, 39, 40, 41) zumindest abschnittsweise flexibel sind, wobei die Anschlagmittel (38, 39, 40, 41) insbesondere zumindest abschnittsweise seilförmig, gurtförmig, kettenförmig oder biegestabförmig sind.

5. Anschlagsystem nach einem der Ansprüche 1 - 4,
**dadurch gekennzeichnet,**
**dass** die Führungselemente (51, 52, 53, 54) dem Fahrgestellrahmen (23) abgewandt trichterförmige Endabschnitte (55, 56, 57, 58) aufweisen.

6. Fahrzeug (1A, 1B, 1C) mit
einem Fahrgestellrahmen (23),
einem Fahrzeugaufbau (2), den der Fahrgestellrahmen (23) trägt, und
einem Anschlagsystem (37A, 37B, 37C) nach einem der Ansprüche 1 - 5,
wobei die Anschlagmittel (38, 39, 40, 41) mit dem Fahrgestellrahmen (23) verbunden sind, und
wobei die Führungselemente (51, 52, 53, 54) zumindest abschnittsweise durch den Fahrzeugaufbau (2) hindurchgeführt sind.

7. Fahrzeug nach Anspruch 6,
**dadurch gekennzeichnet,**
**dass** die Führungselemente (51, 52, 53, 54) von einem Boden (7) des Fahrzeugaufbaus (2) zu einem Dach (8) des Fahrzeugaufbaus (2) geführt sind.

8. Fahrzeug nach Anspruch 7,
**dadurch gekennzeichnet,**
**dass** die Führungselemente (51, 52, 53, 54) mit dem Boden (7) und/oder mit dem Dach (8) verbunden sind.

9. Fahrzeug nach einem der Ansprüche 6 - 8,
**dadurch gekennzeichnet,**
**dass** der Fahrgestellrahmen (23) Längsträger (24, 25) und senkrecht zu den Längsträgern (24, 25) angeordnete Querträger (26, 27, 28, 29, 30) aufweist, wobei die Anschlagmittel (38, 39, 40, 41) mit den Längsträgern (24, 25) und/oder mit den Querträgern (26, 27, 28, 29, 30) verbunden sind.

10. Fahrzeug nach einem der Ansprüche 6 - 9,
**gekennzeichnet durch**
Fahrgestellrahmen-Fahrzeugaufbau-Schnittstellen (33, 34, 35, 36), mit deren Hilfe der Fahrgestellrahmen (23) mit dem Fahrzeugaufbau (2) verbunden ist.

11. Fahrzeug nach Anspruch 10,
**dadurch gekennzeichnet,**
**dass** die Fahrgestellrahmen-Fahrzeugaufbau-Schnittstellen (33, 34, 35, 36) zwischen Anbindungspunkten (42, 43), an denen die Anschlagmittel (38, 39, 40, 41) mit dem Fahrgestellrahmen (23) verbunden sind, angeordnet sind.

12. Fahrzeug nach einem der Ansprüche 6 - 11,
**dadurch gekennzeichnet,**
**dass** das Anschlagsystem (37B) zumindest drei Anschlagmittel (38, 39, 40, 41) aufweist.

13. Fahrzeug nach Anspruch 12,
**dadurch gekennzeichnet,**
**dass** das Anschlagsystem (37B) ein erstes Anschlagmittel (38), ein zweites Anschlagmittel (39) und ein drittes Anschlagmittel (40) aufweist, wobei das zweite Anschlagmittel (39) und das dritte Anschlagmittel (40) entlang einer Querrichtung (y) des Fahrzeugs (1B) betrachtet voneinander beabstandet angeordnet sind, und wobei das erste Anschlagmittel (38) entlang einer senkrecht zu der Querrichtung (y) orientierten Längsrichtung (x) des Fahrzeugs (1B) von dem zweiten Anschlagmittel (39) und dem dritten Anschlagmittel (40) beabstandet angeordnet ist.

14. Fahrzeug nach Anspruch 13,
**dadurch gekennzeichnet,**
**dass** das erste Anschlagmittel (38) entlang der Querrichtung (y) betrachtet zwischen dem zweiten Anschlagmittel (39) und dem dritten Anschlagmittel (40) angeordnet ist.

15. Fahrzeug nach einem der Ansprüche 6 - 14,
**dadurch gekennzeichnet,**
**dass** die Anschlagmittel (38, 39, 40, 41) sowie die Führungselemente (51, 52, 53, 54) parallel und/oder schräg zu einer Hochrichtung (z) des Fahrzeugs (1A, 1B, 1C) verlaufen.

## Geänderte Patentansprüche

### Geänderte Patentansprüche gemäss Regel 137(2) EPÜ.

1. Fahrzeug (1A, 1B, 1C) mit
einem Fahrgestellrahmen (23),
einem Fahrzeugaufbau (2), den der Fahrgestellrahmen (23) trägt, und einem Anschlagsystem (37A, 37B, 37C) zum Verlasten des Fahrzeugs (1A, 1B, 1C),
wobei das Anschlagsystem (37A, 37B, 37C) mehrere Anschlagmittel (38, 39, 40, 41), die mit dem Fahrgestellrahmen (23) verbunden sind, und mehrere Führungselemente (51, 52, 53, 54) für die Anschlagmittel (38, 39, 40, 41) aufweist,
wobei jedem Führungselement (51, 52, 53, 54) ein Anschlagmittel (38, 39, 40, 41) zugeordnet ist, das zumindest abschnittsweise durch das jeweilige Führungselement (51, 52, 53, 54) hindurchgeführt ist, und
wobei die Führungselemente (51, 52, 53, 54) zumindest abschnittsweise durch den Fahrzeugaufbau (2) hindurchgeführt sind.

2. Fahrzeug nach Anspruch 1,
**dadurch gekennzeichnet,**
**dass** die Führungselemente (51, 52, 53, 54) innenseitig mit einer reibungsreduzierenden Beschichtung (63) beschichtet sind.

3. Fahrzeug nach Anspruch 1 oder 2,
**dadurch gekennzeichnet,**
**dass** die Anschlagmittel (38, 39, 40, 41) dem Fahrgestellrahmen (23) abgewandt ösenförmige Anschlagabschnitte (44, 45, 46, 47) aufweisen.

4. Fahrzeug nach einem der Ansprüche 1 - 3,
**dadurch gekennzeichnet,**
**dass** die Anschlagmittel (38, 39, 40, 41) zumindest abschnittsweise flexibel sind, wobei die Anschlagmittel (38, 39, 40, 41) insbesondere zumindest abschnittsweise seilförmig, gurtförmig, kettenförmig oder biegestabförmig sind.

5. Fahrzeug nach einem der Ansprüche 1 - 4,
**dadurch gekennzeichnet,**
**dass** die Führungselemente (51, 52, 53, 54) dem Fahrgestellrahmen (23) abgewandt trichterförmige Endabschnitte (55, 56, 57, 58) aufweisen.

6. Fahrzeug nach einem der Ansprüche 1 - 5,
**dadurch gekennzeichnet,**
**dass** die Führungselemente (51, 52, 53, 54) von einem Boden (7) des Fahrzeugaufbaus (2) zu einem Dach (8) des Fahrzeugaufbaus (2) geführt sind.

7. Fahrzeug nach Anspruch 6,
**dadurch gekennzeichnet,**
**dass** die Führungselemente (51, 52, 53, 54) mit dem Boden (7) und/oder mit dem Dach (8) verbunden sind.

8. Fahrzeug nach einem der Ansprüche 1 - 7,
**dadurch gekennzeichnet,**
**dass** der Fahrgestellrahmen (23) Längsträger (24, 25) und senkrecht zu den Längsträgern (24, 25) angeordnete Querträger (26, 27, 28, 29, 30) aufweist, wobei die Anschlagmittel (38, 39, 40, 41) mit den Längsträgern (24, 25) und/oder mit den Querträgern (26, 27, 28, 29, 30) verbunden sind.

9. Fahrzeug nach einem der Ansprüche 1 - 8,
**gekennzeichnet durch**
Fahrgestellrahmen-Fahrzeugaufbau-Schnittstellen (33, 34, 35, 36), mit deren Hilfe der Fahrgestellrahmen (23) mit dem Fahrzeugaufbau (2) verbunden ist.

10. Fahrzeug nach Anspruch 9,
**dadurch gekennzeichnet,**
**dass** die Fahrgestellrahmen-Fahrzeugaufbau-Schnittstellen (33, 34, 35, 36) zwischen Anbindungspunkten (42, 43), an denen die Anschlagmittel (38, 39, 40, 41) mit dem Fahrgestellrahmen (23) verbunden sind, angeordnet sind.

11. Fahrzeug nach einem der Ansprüche 1 - 10,
**dadurch gekennzeichnet,**
**dass** das Anschlagsystem (37B) zumindest drei Anschlagmittel (38, 39, 40, 41) aufweist.

12. Fahrzeug nach Anspruch 11,
**dadurch gekennzeichnet,**
**dass** das Anschlagsystem (37B) ein erstes Anschlagmittel (38), ein zweites Anschlagmittel (39) und ein drittes Anschlagmittel (40) aufweist, wobei das zweite Anschlagmittel (39) und das dritte Anschlagmittel (40) entlang einer Querrichtung (y) des Fahrzeugs (1B) betrachtet voneinander beabstandet angeordnet sind, und wobei das erste Anschlagmittel (38) entlang einer senkrecht zu der Querrichtung (y) orientierten Längsrichtung (x) des Fahrzeugs (1B) von dem zweiten Anschlagmittel (39) und dem dritten Anschlagmittel (40) beabstandet angeordnet ist.

13. Fahrzeug nach Anspruch 12,
**dadurch gekennzeichnet,**
**dass** das erste Anschlagmittel (38) entlang der Querrichtung (y) betrachtet zwischen dem zweiten Anschlagmittel (39) und dem dritten Anschlagmittel (40) angeordnet ist.

14. Fahrzeug nach einem der Ansprüche 1 - 13,
**dadurch gekennzeichnet,**
**dass** die Anschlagmittel (38, 39, 40, 41) sowie die Führungselemente (51, 52, 53, 54) parallel und/oder schräg zu einer Hochrichtung (z) des Fahrzeugs (1A, 1B, 1C) verlaufen.
